# EUROPEAN PATENT APPLICATION

(11) **EP 2 454 936 A2**
(43) Date of publication of application: **23.05.2012**
(21) Application number: 10799992.2
(22) Date of filing: 09.07.2010
(51) Int. Cl.: A01K 7/04, A01K 7/02

(54) **AUTOMATIC WARM AND CLEAN WATER SUPPLY APPARATUS FOR LIVESTOCK**

(30) Priority: 16.07.2009 KR 20090064720; 30.04.2010 KR 20100040430
(71) Applicant: Silti Co., Ltd., Gyeonggi-Do 411-560 (KR); Myung, In Gu, Gyeonggi-do 486-882 (KR); Shin, Bong Soo, Seoul 137-904 (KR)
(72) Inventor: SHIN, Il Hyun, Gyeonggi-Do 412-470 (KR)
(74) Representative: Marchitelli, Mauro
(86) International application number: PCT/KR2010/004466
(87) International publication number: WO 2011/007981

(57) **Abstract**

Disclosed is a water supply device installed in a livestock barn for raising livestock such as milk cattle. A water supply unit consisting of an inner case, an outer case and a floating case is installed inward of the topside of a water tank, and a check valve is installed in the floor portion of the floating case, and in the water tank are installed a water supply pipe having a level limit valve, a drainage pipe, an overflow pipe, a heater, a water level sensor and a temperature sensor. By dint of the floating case having a predetermined quantity of water, livestock such as milk cattle can take water by drinking water, and the check valve formed in the floating case plays a role of maintaining the water level in the floating case constant at all times and at the same time it shuts off the inflow of foreign material into the water tank to prevent decomposition of water. Also, the water supply unit on the top of the water tank is open with the least size possible for drinking water, so that the least possible heat loss occurs. Therefore, the wintertime heat-conserving effect is excellent and it is possible to provide water that is clean and of optimum temperature at all times.

## Description

### [Technical Field]

The present invention relates to a water supply device installed in a livestock barn for raising livestock such as milk cattle, goats and pigs, and more specifically to an automatic heat-conserving clean water supply device for livestock, wherein when livestock such as milk cattle drink water by using a water supply unit provided in a water tank, water is replenished automatically to a predetermined height, and the opening area of the water supply unit is minimized so that water temperature can be maintained constant by a heater at a low power consumption even in very cold weather.

### [Background Art]

In general, water supply devices are usually installed for quenching the thirst of livestock in a livestock barn for raising livestock such as beef cattle, milk cattle, goats, pigs, sheep or dogs.

Such a water supply device has been developed in various structures and shapes, but usually automatic water supply devices are widely used in which a predetermined quantity of water is supplied from a water tank so as to maintain a predetermined water level at all times in the water supply unit.

As an example of the automatic water supply device, Korea Patent Registration No. 10-736321 filed by the applicant of the present invention discloses an automatic water supply device, wherein when water is supplied to the water supply unit from the water tank, livestock such as milk cattle suck it by sticking the mouth close to the water supply unit so that water can be sucked in by the suction power of livestock.

However, the water supply device as mentioned above has a problem that milk cattle have a habit of sucking anything because it has a structure in a form of sucking water with the mouth of livestock touching it.

Namely, because milk cattle are livestock bred to mass-produce milk, the behavior of approaching milk cattle nearby to suck milk cannot be suppressed unless the habit of sucking anything is caused to degenerate. Accordingly, in the case of milk cattle, if the water supply device in which water is taken by sucking it as mentioned above is used continuously, the behavior or nature of sucking milk is reinforced, so this eventually causes a problem of frequently sucking milk of other milk cattle.

Because it is not desirable to use a water supply device in which milk cattle take water by sucking it as mentioned above, it is necessary to install in the site a water supply device whereby animals such as milk cattle can have their thirst quenched anytime. At this time, it is urgently needed that we have a water supply device whereby thirst can be quenched by taking water in a form of drinking it instead of sucking it.

### [Disclosure]

### [Technical Problem]

The present invention is to solve such a problem as mentioned above, and it is an object of the present invention to provide an automatic heat-conserving clean water supply device, wherein a water supply unit consisting of an inner case, outer case and floating case is installed inward of the topside of the water tank, and a check valve is installed in the bottom portion of the floating case, and a water supply pipe having a level limit valve, a drainage pipe, an overflow pipe, a heater, a water level sensor and a temperature sensor are installed respectively in the water tank, so that water gathered in the floating case can be taken by drinking for livestock such as milk cattle to take new water sufficiently, and the check valve can prevent foreign material such as feedstuff discharged from the mouth of livestock such as milk cattle from being introduced into the water tank from the water supply unit, and the opening area on the top of the water tank is minimized to raise the wintertime heat-conservation effect to minimize the electric power consumption of the heater, so that all the problems that a conventional automatic water supply device had can be rationally solved.

### [Technical Solution]

To accomplish the above object, the present invention provides an automatic heat-conserving clean water supply device for livestock comprising a water supply unit that is inserted and fixed inward of the topside of the water tank, and a water supply pipe having a level limit valve, an overflow pipe, a heater, a water level sensor and a temperature sensor which are mounted in the water tank, and a drainage pipe which is joined to the bottom of the water supply unit, wherein the water supply unit installed immovably to the water tank consists of an outer case, an inner case disposed with a gap between each other, and a floating case that is placed between the outer case and the inner case so as to rise and descend, and when water is filled in the water tank, water is also filled in the outer case, and simultaneously as the floating case is lifted by buoyancy the check valve of the floating case is opened so that the water tank and the water supply unit can maintain the same water levels.

### [Advantageous Effects]

According to the present invention, the water supply device can prevent milk cattle from approaching nearby milk cattle to suck milk by causing the habit of sucking milk from the nipple of milk cattle to gradually degenerate, since livestock such as milk cattle, goats or pigs can take water by drinking it by means of the floating case having a predetermined quantity of water. In addition, the check valve provided in the floating case plays a role of maintaining the water level in the floating case constant at all times and not only does it shut off the introduction of foreign material into the water tank, but also decomposition of water can be prevented. Furthermore, since the water supply unit on the top of the water tank is open with a size relevant to the size of the mouth of livestock drinking water, the least possible heat loss occurs, so that the heat conserving effect in wintertime is excellent and it is possible to provide water that is clean at all times and has optimum temperature.

### [Description of Drawings]

The above objects, features and advantages of the present invention will become more apparent to those skilled in the related art in conjunction with the accompanying drawings. In the drawings:
Fig. 1 is a perspective view showing the whole of a water supply device according to the present invention;
Fig. 2 is a plan view showing the whole of the water supply device according to the present invention;
Fig. 3 is an exploded perspective view showing a section of a part of the water supply unit of the water supply device according to the present invention;
Fig. 4 is a perspective view showing a section of a part of the water supply device;
Fig. 5 is a sectional view of one side of the water supply device according to the present invention;
Fig. 6 is a sectional view of the other side of the water supply device according to the present invention;
Fig. 7 is a sectional view of a state in which water is not filled in the water supply device according to the present invention;
Fig. 8 is a sectional view of a state in which water is filled in the water supply device according to the present invention;
Fig. 9 is a sectional view showing the operation state in the case of taking water in the water supply device;
Fig. 10 is a sectional view showing the unlocked state of a level limit valve of the water supply device according to the present invention;
Fig. 11 is a sectional view showing the locked state of the level limit valve of the water supply device according to the present invention; and
Fig. 12 is a plan view showing a modified embodiment of the water supply device according to the present invention.

### * Description of Reference Numerals in Drawings

10: water tank, 11: water supply pipe, 12: overflow pipe, 13: drainage pipe, 14: floater, 15: level limit valve, 16: valve body, 17: intake port, 18: watertight packing, 19: rope, 20 and 20': water supply unit, 30: outer case, 31 and 31': water flow slot, 40: inner case, 50: floating case, 51: check valve, 52: extended portion, 53: space, 60: cover, 70: fixture, 71: holder, 72: inclined slot, 80: heater, 81: water level sensor, 82: temperature sensor.

### [Best Mode]

Terms or words used in the specification and claims should not be construed as limited to a lexical meaning, and should be understood as appropriate notions by the inventor based on that he/she is able to define terms to describe his/her invention in the best way to be seen by others.

Hereinafter, preferable embodiments of the present invention will be described with reference to the accompanying drawings.

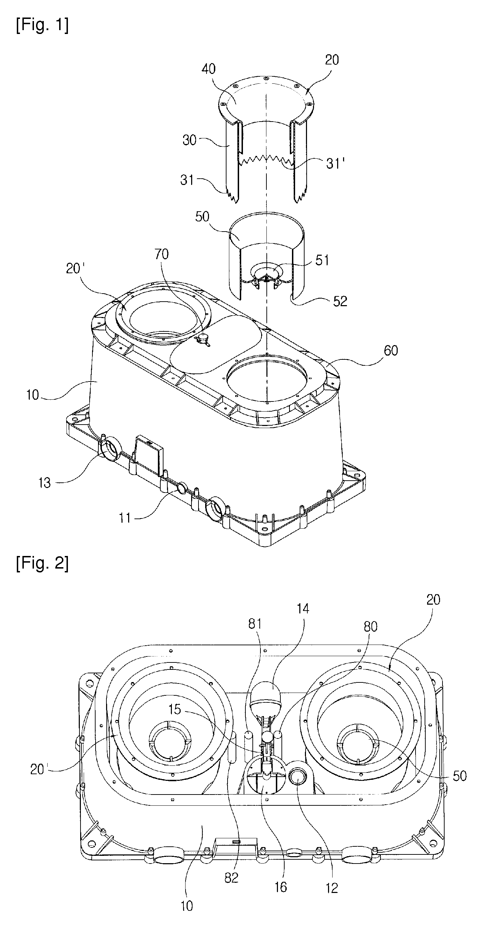

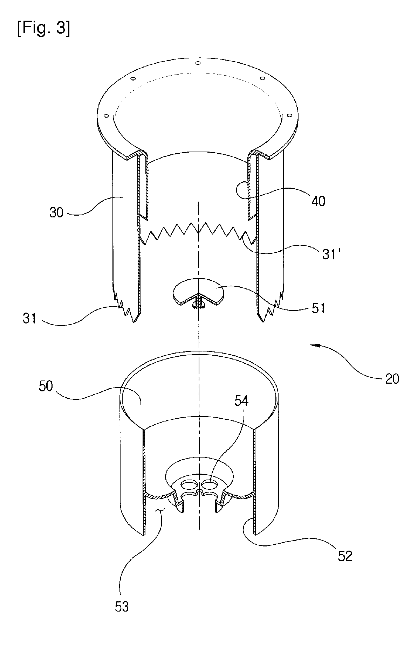

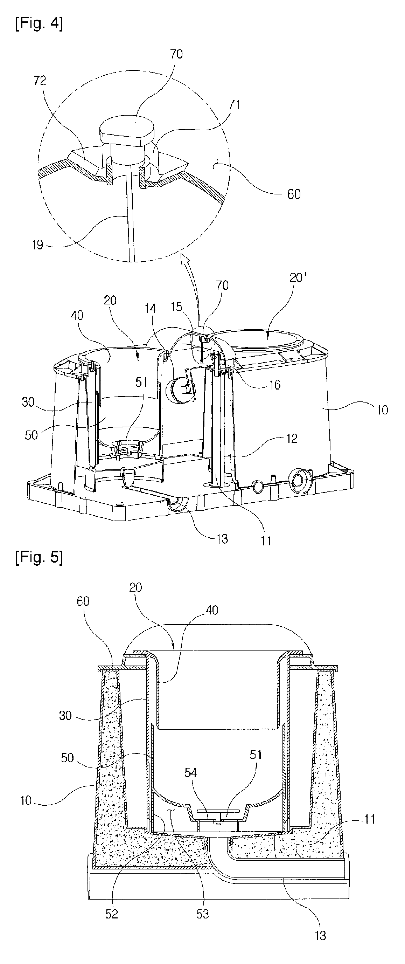

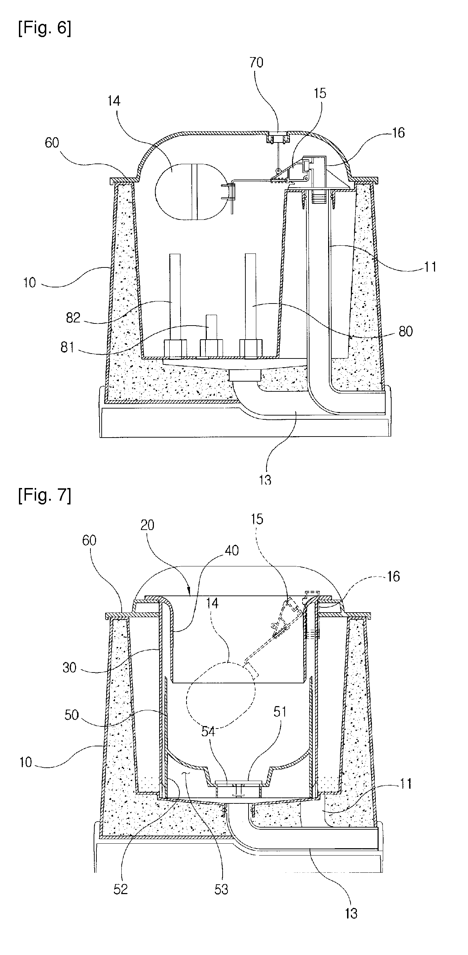

Fig. 1 is a perspective view showing the whole of a water supply device according to the present invention, Fig. 2 is a plan view showing the whole of the water supply device according to the present invention, Fig. 3 is an exploded perspective view showing a section of a part of the water supply unit of the water supply device according to the present invention, Fig. 4 is a perspective view showing a section of a part of the water supply device, Fig. 5 is a sectional view of one side of the water supply device according to the present invention, Fig. 6 is a sectional view of the other side of the water supply device according to the present invention.

As shown in these diagrams, the water supply device of the present invention consists of a water tank 10 having an internal space, and a plurality of water supply units 20 and 20' inserted in the water tank 10.

To the water tank 10 are connected, respectively, a water supply pipe 11 for filling water in the water tank 10 from outside, an overflow pipe 12, separately from the water supply pipe 11, for discharging water in the water tank 10 automatically when water in the water tank 10 is filled to more than a predetermined water level, and a drainage pipe 13 for draining water in the water tank 10 quickly when cleaning the inside of the water tank 10. And the water tank 10 is provided additionally with a cover 60 for opening the whole top as necessary to be connected to the opened top of the water tank 10.

In addition, upside of the water supply pipe 11 is mounted a level limit valve 15 having a floater 14 connected thereto by a connecting rod for rising and descending according to the water level. The level limit valve 15 is opened by the floater 14 descending when the water level in the water tank 10 descends, so that water is filled in the water tank 10 automatically. On the other hand, when the floater 14 rises to a predetermined water level, the level limit valve 15 is closed, so that no more water is supplied to the inside of the water tank 10.

Here, one side of the level limit valve 15 is hinge-joined to a separate valve body 16 which is joined to an upper end of the water supply pipe 11, and to the valve body 16 is through-formed toward the level limit valve 15 an intake port 17 in communication with the water supply pipe 11. On one side of the level limit valve 15 corresponding to the intake port 17 is attached a watertight packing 18 made of soft elastic material. Therefore, when the level limit valve 15 is pivoted or stopped in a hinge-joined condition, the watertight packing 18 opens or closes the intake port 17, so that water can be supplied or to shut off the inside of the water tank 10 from the water supply pipe 11.

In particular, the valve body 16 can also cause water to not be supplied by shutting off the water supply pipe 11 by force according to the direction of rotation of an extra fixture 70 joined to the topside of the water tank 10. The fixture 70 is mounted on a holder 71 formed on the top of the cover 60, and inclined slots 72 are formed on both sides of the holder 71, and below the fixture 70 is located a rope 19 connected to the valve body 16 through the cover 60. Accordingly, free rotary motion and forced closing for the level limit valve 15 can be selectively made by the rise and descent of the fixture 70.

As mentioned above, the water supply units 20 and 20' consist of the outer case 30, the inner case 40, and the floating case 50. The outer case 30 has a shape with the bottom open and at the lower end of the open outer case 30 are formed water flow slots 31 and 31' in succession. The inner case 40 also has a shape wherein the bottom is open and is arranged inside the outer case 30 with a gap, while it has a length shorter than the outer case 30. At this time, the outer case 30 and the inner case 40 may be molded monolithically by injection from the bottom of the water supply units 20 and 20', or fixed by fastening or welding from the bottom of the water supply units 20 and 20' in a flat plate shape.

Further, the floating case 50, with the top open, can rise and descend through the gap between the outer case 30 and the inner case 40, and has a check valve 51 mounted on the bottom. At this time, a lower extended portion 52 is formed on the lower side of the floating case 50, so that a predetermined space 53 is provided on the inside of the extended portion 52. In the space 53 is filled air, and the air filled in the space 53 provides buoyancy so that the floating case 50 can rise and descend by buoyancy according to the water level under the action of air filled in the space 53.

The check valve 51, which is a kind of a one-way valve, has a structure in which water can be introduced upward to the inside of the floating case 50 from the outside, that is, the bottom of the floating case 50 by water pressure, whereas water cannot be discharged downward of the bottom from the topside of the floating case 50. The check valve 51 is opened while it rises by dint of water pressure simultaneously with the rise of the floating case 50 according to the characteristics of the water tank 10 in which water is filled from the bottom of the floating case 50, and when equilibrium of water pressure is obtained between the inside and outside of the floating case 50, the check valve 51 is closed as it descends by the self-weight.

In particular, a heater 80 is mounted on the inside of the water tank 10, so that it is possible to prevent water in the water tank 10 from freezing when the temperature is low in wintertime. So it has a characteristic that it can be used continuously for all seasons without being affected by seasons or environment.

At this time, it is necessary to prevent operation of the heater 80 from causing fire, etc. in case water in the water tank 10 is exhausted or not sufficient for various unpredictable reasons at the time when the use of the heater 80 is necessary, by mounting in the water tank 10 a separate water level sensor 81, a temperature sensor 82 and a not shown controller connected to the heater 80. For this purpose, the water level sensor 81 is mounted to shut off the power of the heater 80 automatically when the water level in the water tank 10 is below a reference line. In order to prevent the water in the water tank 10, in which the temperature rises due to the heater 80, from becoming excessively hot or cold, the controller shuts off the power to the heater 80 based on the signal from the temperature sensor 82 when it detects temperatures above a predetermined level and supplies the power to the heater 80 when it detects temperatures below a predetermined level so as to keep the water temperature in the water tank 10 constant at all times.

The water supply device of the present invention having the above configuration and structure becomes such a state in which the floating case 50 is completely down to the bottom of the water tank 10 along the outer case 30 by the self-weight thereof when water is not filled in the water tank, as shown in Fig. 7.

The floater 14 is down in such a state, so that water supplied from the water supply pipe 11 is filled in the water tank 10 through the intake port 17 of the valve body connected by the water supply pipe 11 when the level limit valve 15 is pivoted. Subsequently, the water that is slowly filled up from the bottom in the water tank 10 is filled up simultaneously also in the outer case 30 through the water flow slots 31 and 31' of the outer case 30. Along with this, the floating case 50, which is descending, is gradually filled with water from the extended portion 52 below, but the extended portion 52 plays the role of shutting air in, so the air that was in the space 53 cannot get out even if water is filled up from below. Because of that, the floating case 50 rises gradually due to buoyancy according to the water level under the action of air filled in the space.

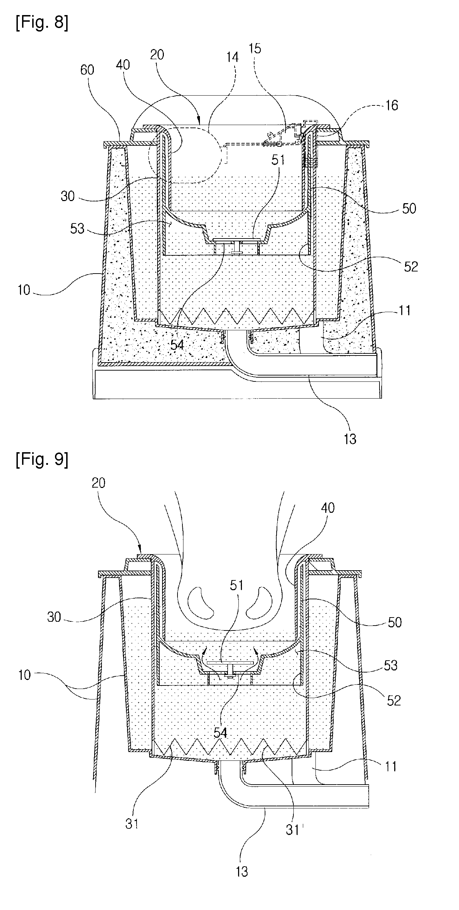

Therefore, it is possible to maintain the target water level for the inside of the water tank 10 thanks to the rise of the floater 14 and the closing action of the level limit valve 15. The water in the water tank 10 flows in through the outer case 30 and opens the check valve 51 through the water pressure acting on the floating case 50. Accordingly, the inner case 40 that is located inside the floating case 50 as well as the inside of the floating case 50 becomes the state in which the same level as that of the water tank is maintained, as shown in Fig. 8.

At this time, if the water level is the same in the water tank 10 and the floating case 50, the check valve 51 descends by the self-weight thereof by dint of the equilibrium of water pressure to be closed.

In this condition, if livestock such as milk cattle drink the water in the floating case 50 to quench thirst, the water level in the floating case 50 is lowered, and the water in the water tank 10 is filled into the floating case 50 as it rises, as shown in Fig. 9. At the same time, the floater 14 opens the level limit valve 15 as it descends to fill new water through the water supply pipe 11, so it becomes possible to continuously maintain the same water level.

Especially, even if feedstuff or various types of foreign material were dropped into the floating case 50 in the course of livestock such as milk cattle taking water, it is possible to prevent them from being introduced into the water tank 10, because the floating case 50 and the water tank 10 are shut off from each other by the check valve 51. Even if the check valve 51 is opened in the course of taking water in the floating case 50, it is of such a structure that the foreign material in the floating case 50 is not introduced into the water tank 10 by dint of the force whereby water is introduced into the water tank 10 and there is no where for it to go except being taken by livestock. Here, the floating case 50 is moved up and down in the outer case 30 along with the water level. At this time, the floating case 50 cannot move if there is foreign material trapped between it and the outer case 30. To solve this problem, the inner case 40 plays a role of guide for the movement of the floating case 50 to be made smoothly.

In addition, the inner case 40 also plays a role of inner cover that prevents the rise and descent from not occurring smoothly due to foreign material trapped between the outer case 30 and the floating case 50 in the rise and descent of the floating case 50. Here, the upper portion of the floating case 50 rises and descends through the gap between the outer case 30 and the inner case 40, and since the upper portion of the outer case 30 and the inner case 40 are connected to each other as one unit, foreign material such as feedstuff introduced from outside is not trapped in the gap between the outer case 30 and the inner case 40 and the gap between the inner surface of the outer case 30 and the floating case 50, so the floating case 50 can rise and descend smoothly and stably at all times.

Accordingly, the present invention can maintain the same water level at all times, so livestock such as milk cattle can quench thirst anytime conveniently, and introduction of foreign material into the water tank is prevented, so it is possible to prevent degeneration or decomposition by foreign material.

Especially through water level control, milk cattle do not suck in water but take water while drinking, so in the case of milk cattle, the habit of sucking can be caused to degenerate gradually, so that the negative effects of approaching milk cattle nearby to suck milk, etc. can be prevented.

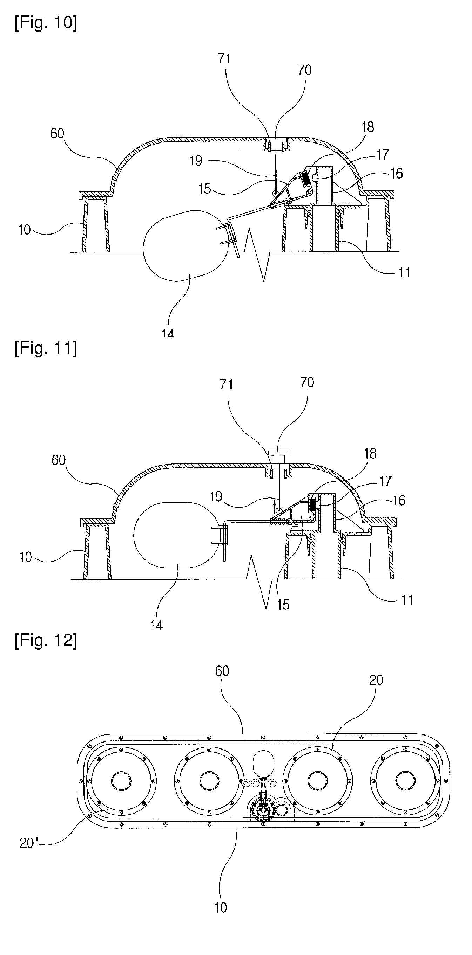

And if the water supply device of the present invention is not in use or water supply is suspended temporarily, the fixture 70 that is exposed on the top of the cover 60 in the upper portion of the water tank 10 as mentioned above is elevated to maintain a watertight condition of the water supply pipe 11 by force by dint of the level limit valve 15. As shown in Fig. 10, if the fixture 70 is inserted into the holder 71 above the cover 60, the rope 19 connected to the fixture 70 descends. So the level limit valve 15 connected to the lower end of the rope 19 becomes possible to pivot up and down from the valve body 16. Accordingly, in the case of using the water supply device, the level limit valve 15 opens or closes the intake port 17 of the valve body 16 by dint of the action of the floater 14 due to water level, so that it becomes possible to maintain the water level in the water tank 10 to a predetermined level automatically.

On the other hand, in the case that the water supply device is not in use as mentioned above or it is necessary to suspend water supply as when cleaning the inside of the water tank 10, after raising the fixture 70 by inserting it into the holder 71 of the cover 60 as shown in Fig. 11, adhere the raised fixture 70 tightly to the topside of the cover 60 instead of the inside of the holder 71 while inserting the rope 19 through the inclined slot 72 of one side from the holder 71 by using the raised fixture 70, then the intake port 17 of the valve body 16 is forcibly closed and shut off by the watertight packing 18, by dint of the rise of the rope 19 and the upward rotation of the level limit valve 15.

Accordingly, the fixture 70 exposed up-and-outward of the water tank 10 is inserted into the holder 71 for the automatic opening and closing action to be made for the water supply pipe, or the fixture 70 is raised from the holder 71 and fixed to forcibly shut off water supply, so it is possible to prevent unnecessary waste of water when cleaning the inside of the water tank 10 or it is not in use. And, as described above, in the case of cleaning the inside of the water tank 10, it is possible to quickly discharge the water in the water tank 10 by opening the drainage pipe 13 connected to the bottom portion of the water tank 10 with the level limit valve 15 closed by the fixture 70. Therefore, it is possible to carry out the inside cleaning of the water tank 10 quickly and effectively.

The water supply device of the present invention can be used as a two-head water supply device by installing one water supply unit 20 and 20' respectively on either side of the top of the water tank 10, with a water supply pipe 11 and overflow pipe 12 connected respectively to the central portion of the water tank 10, or as a four-head water supply device as shown in Fig. 12 by installing two water supply units 20 and 20' respectively on either side from the center of the water tank 10. Also, a variety of modified manufacture is possible by changing the length of the water tank 10 or adjusting the number of installations of water supply units 20 and 20' accordingly.

Although the present invention has been described in connection with the exemplary embodiments illustrated in the drawings, it is only illustrative. It will be understood by those skilled in the art that various modifications and equivalents can be made to the present invention. Therefore, the true technical scope of the present invention should be defined by the appended claims.

## Claims

1. An automatic heat-conserving clean water supply device for livestock, comprising:
a water tank 10 in which a cover 60 is combined on the top, and a water supply pipe 11, an overflow pipe 12 and a drainage pipe 13 are connected thereto; and
water supply units 20 and 20' which are inserted and installed inward of the water tank 10 from the top of the cover 60,
wherein the water supply units 20 and 20' includes an outer case 30 which is immovably fixed on the top of the water tank 10 and below which water flow slots 31 and 31' are formed at the opened lower end, an inner case 40 which is arranged with a gap between it and the inside of the outer case 30 and the bottom of which is open, and a floating case 50 which is arranged in the gap between the outer case 30 and the inner case 40 to elevate up and down therein, and a check valve 51 is joined to the bottom portion thereof, and
when water is filled in the water tank 10 through the water supply pipe 11, water is filled up in the outer case 30 through water flow slots 31 and 31', and simultaneously with the rise of the floating case 50 by buoyancy, the check valve 51 is opened upward so that the water tank 10 and the water supply units 20 and 20' maintain the same water levels.

2. The water supply device of claim 1, wherein the floating case 50 has a space 53 defined by a lower extended portion 52, so that the floating case 50 can rise and descend due to buoyancy according to the water level under the action of air filled in the space 53.

3. The water supply device of claim 1, wherein a level limit valve 15 which is opened and closed by a floater 14 is coupled to the water supply pipe 11.

4. The water supply device of claim 3, wherein one end of the level limit valve 15 is hinge-joined to a separate valve body 16 that is coupled to the upper end of the water supply pipe 11, and to one side of the level limit valve 15 is attached a watertight packing 18 corresponding to an intake port 17 that penetrates the inside and outside of the valve body 16, so that when the floater 14 descends according to the water level the intake port 17 is opened due to the downward pivoting of the level limit valve 15, and when the floater 14 rises the intake port 17 is tightly closed by the watertight packing 18 due to the upward pivoting of the level limit valve 15.

5. The water supply device of claim 3, wherein the other end of the level limit valve 15 is connected to the lower end of a rope 19 that is drawn upward of the water tank 10, and the top end of the rope 19 is connected to a separate fixture 70 that rises and descends from above the cover 60 of the water tank 10, and the fixture 70 is placed in the holder 71 protruded downward from the topside of the cover 60, and inclined slots 72 are formed on both sides of the holder 71, so that when the fixture 70 is raised from the holder 71 and fixed tightly to the topside of the cover 60, the level limit valve 15 is pivoted upward according to the rise of the rope 19 to shut off the water supply pipe 11 by force.

6. The water supply device of claim 1, wherein the water tank 10 has a heater 80 embedded inside thereof.

7. The water supply device of claim 6, wherein the water tank 10 has a water level sensor 81 and a temperature sensor 82 installed inside thereof, so that the electric power is selectively supplied to the heater 80 based of the detecting signals from the water level sensor 81 and the temperature sensor 82.

8. The water supply device of claim 1, wherein the water tank 10 has a water supply pipe 11 and an overflow pipe 12 arranged in the central portion, and on both sides of the water supply pipe 11 and the overflow pipe 12 are installed respectively in separation water supply units 20, 21' to construct a two-head water supply device.

9. The water supply device of claim 1, wherein the water tank 10 has a water supply pipe 11 and an overflow pipe 12 arranged in the central portion, and on both sides of the water supply pipe 11 and the overflow pipe 12 are installed two water supply units 20 and 20' respectively in separation to construct a four-head water supply device.
